# EUROPÄISCHE PATENTSCHRIFT

(11) **EP 2 803 953 B1**
(45) Veröffentlichungstag und Bekanntmachung des Hinweises auf die Patenterteilung: **08.09.2021**
(21) Anmeldenummer: 14167920.9
(22) Anmeldetag: 12.05.2014
(51) Int. Cl.: G01F 23/284, G01F 23/296, B65F 1/16

(54) **Abfallbehältnis mit Sensoranordnung und Verfahren zum Überwachen eines Abfallbehältnisses**
Waste container with sensor assembly and method for monitoring a waste container
Récipient à déchets doté d'un ensemble de capteurs et procédé de surveillance d'un récipient à déchets

(30) Priorität: 16.05.2013 DE 102013209075
(43) Veröffentlichungstag der Anmeldung: 19.11.2014
(73) Patentinhaber: Robert Bosch GmbH, 70442 Stuttgart (DE)
(72) Erfinder: Peters, Christian, 79100 Freiburg I.Br. (DE); Gaier, Stefan, 70599 Stuttgart (DE)

(56) Entgegenhaltungen:
- EP-A1- 1 995 573
- WO-A1-91/14639
- FR-A1- 2 952 714
- FR-A1- 2 964 736
- US-A1- 2007 101 875
- US-A1- 2010 025 509
- US-A1- 2010 106 446

## Beschreibung

Die Erfindung betrifft ein Abfallbehältnis mit einer integrierten Sensoranordnung und ein Verfahren zum Überwachen eines Abfallbehältnisses.

### Stand der Technik

Mülltonnen oder Abfallbehälter werden heutzutage zeitbasiert geleert, das heißt ein Entsorgungsfahrzeug folgt einer festgelegten Route zu festgelegten Zeiten und leert die entlang dieser Route befindlichen Abfallbehälter. Diese Vorgehensweise berücksichtigt dabei nicht den variablen Anfall von tatsächlich zu entsorgendem Müll.

Die Druckschrift EP 1 562 844 B1 offenbart einen Müllbehälter mit einer im Inneren angebrachten Lichtschranke, welche hineingeworfene, zur Entsorgung vorgesehene Gegenstände detektiert und basierend auf einem detektierten Einwurf eines Gegenstands einwurfsabhängige Ausgabesignale erzeugt.

In der Druckschrift EP 0 816 259 ist ein Müllcontainer beschrieben, welcher einen Füllgrad des Müllcontainers mit Müll über Sensoren bestimmen kann und den Füllgrad an ein zentrales Entsorgungsunternehmen senden kann.

Die Druckschrift WO/2004/110659 A2 zeigt einen photovoltaisch betreibbaren Müllcontainer mit integrierter Abfallpresse.

In der Druckschrift US 2010/0106446 A1 wird ein Verfahren zur Bestimmung einer Eigenschaft einer Substanz in einem Vorratsbehälter beschrieben.

Die Druckschrift WO 91/14639 zeigt ein Verfahren zum mengenbezogenen Entsorgen von Haushaltsmüll.

In der Druckschrift FR 2 952 714 A1 wird eine autonome Fernerkundungsvorrichtung zur Messung der Füllrate eines Behälters beschrieben.

Die Druckschrift US 2007/0101875 A1 zeigt eine Müllpresse, die über Photovoltaik mit Energie versorgt wird. Die Müllpresse umfasst einen Füllstandsensor und einen Deckel mit einem weiteren Sensor, der dazu ausgelegt ist, ein Öffnen des Deckels zu detektieren, wobei der Füllstandsensor in einem Energiesparzustand betreibbar ist, bis durch den weiteren Sensor ein Öffnen des Deckels detektiert worden ist.

Es besteht ein Bedarf an Lösungen für Überwachung von Abfallbehältnissen, welche im Hinblick auf Energieeffizienz, Bedarfsgerechtheit, Dezentralisierung und Zuverlässigkeit gegenüber herkömmlichen Lösungen verbessert sind.

### Offenbarung der Erfindung

Die vorliegende Erfindung schafft gemäß einem Aspekt ein Abfallbehältnis, mit einem Deckel; und einer in dem Deckel integrierten Sensoranordnung, welche einen ersten Sensor, der dazu ausgelegt ist, ein Öffnen des Deckels zu detektieren, und mindestens einen zweiten Sensor aufweist, welcher dazu ausgelegt ist, den Füllgrad und/oder den Füllstand des Abfallbehältnisses sensorisch zu ermitteln, wobei der zweite Sensor in einem Energiesparzustand betreibbar ist, bis durch den ersten Sensor ein öffnen des Deckels detektiert worden ist.

Gemäß einem weiteren Aspekt schafft die vorliegende Erfindung ein Verfahren zum Überwachen eines Abfallbehältnisses, mit den Schritten des Detektierens eines Öffnens eines Deckels des Abfallbehältnisses, des Aktivierens eines Sensors einer Sensoranordnung des Abfallbehältnisses in Abhängigkeit von dem Detektieren des Öffnens des Deckels von einem Energiesparzustand in einem aktiven Betriebszustand, und des Ermittelns eines Füllgrads und/oder Füllstands des Abfallbehältnisses durch den Sensor.

### Vorteile der Erfindung

Eine Idee der vorliegenden Erfindung ist es, eine Mülltonne oder einen anderen geeigneten Abfallcontainer mit einer Sensoranordnung in einem Deckel der Tonne oder des Containers auszustatten, welcher dazu ausgelegt ist, das öffnen des Deckels mit einem ersten Sensor zu detektieren und erst bei einem derartigen detektierten Öffnen zweite Sensoren zu aktivieren, welche Füllcharakteristika der Tonne oder des Containers ermitteln können.

Erfindungsgemäß umfasst das Abfallbehältnis weiterhin eine Steuereinrichtung, welche mit dem ersten Sensor und dem mindestens einen zweiten Sensor verbunden ist, und welche dazu ausgelegt ist, von dem ersten Sensor nach Detektion eines Öffnens des Deckels ein Wecksignal entgegenzunehmen und in Abhängigkeit von dem Wecksignal den zweiten Sensor von dem Energiesparzustand in einen aktiven Betriebszustand zu versetzen.

Erfindungsgemäß weist das Abfallbehältnis weiterhin eine Funkeinrichtung auf, welche mit der Steuereinrichtung verbunden ist, und welche dazu ausgelegt ist, ein Funksignal mit Informationen über den sensorisch ermittelten Füllgrad und/oder Füllstand des Abfallbehältnisses auszusenden. Dies ermöglicht in vorteilhafter Weise ein bedarfsgerechtes Informieren des Entsorgungsunternehmens, so dass sich Leerungsfahrten optimieren und Treibstoff einsparen lässt. Weiterhin besteht dadurch der Vorteil, dass ein Nutzer über Smartphone oder ähnliche Kommunikationseinrichtungen stets über den Füllstand/Füllgrad des Abfallbehältnisses informiert bleibt.

Gemäß einer weiteren Ausführungsform des erfindungsgemäßen Abfallbehältnisses kann das Abfallbehältnis weiterhin eine Energieversorgungseinrichtung umfassen, welche mit der Steuereinrichtung, dem ersten Sensor und/oder dem mindestens einen zweiten Sensor verbunden ist, und welche dazu ausgelegt ist, die Steuereinrichtung, den ersten Sensor und/oder den mindestens einen zweiten Sensor mit elektrischer Energie zu versorgen. Dies ermöglicht vorteilhafterweise zumindest temporäre Autarkie der Sensoranordnung.

Gemäß einer weiteren Ausführungsform des erfindungsgemäßen Abfallbehältnisses kann die Energieversorgungseinrichtung eine Batterie, einen Akkumulator oder eine Energieerntevorrichtung aufweisen. Besonders vorteilhaft lassen sich sogenannte "energy harvesting devices" einsetzen, die Energie aus ihrer Umwelt aufnehmen und in elektrische Energie umwandeln können. Dies ermöglicht im Idealfall einen vollständig autarken Betrieb des Abfallbehältnisses.

Gemäß einer weiteren Ausführungsform des erfindungsgemäßen Abfallbehältnisses kann der zweite Sensor einen Radarsensor und/oder einen Ultraschallsensor umfassen. Dadurch kann der Kompaktierungsgrad des im Abfallbehältnis liegenden Abfalls besonders gut und zuverlässig ermittelt werden.

Gemäß einer weiteren Ausführungsform des erfindungsgemäßen Abfallbehältnisses kann der erste Sensor einen Inertialsensor und/oder einen Beschleunigungssensor umfassen.

Erfindungsgemäß umfasst das Abfallbehältnis weiterhin einen Gassensor, welcher dazu ausgelegt ist, eine Gasbildung in dem Abfallbehältnis zu detektieren, und/oder einen Temperatursensor, welcher dazu ausgelegt ist, eine Momentantemperatur in dem Abfallbehältnis zu ermitteln. Dies ermöglicht in vorteilhafter Weise ein frühzeitiges Detektieren von Gefahrensituationen, die von dem in dem Abfallbehältnis liegenden Abfall ausgehen können, wie beispielsweise Gasbildung durch Biomüll oder Brand durch übermäßige Hitzeentwicklung.

Gemäß einer weiteren Ausführungsform des erfindungsgemäßen Abfallbehältnisses kann das Abfallbehältnis weiterhin ein Nutzerbedienelement aufweisen, welches mit der Steuereinrichtung verbunden ist, und welches dazu ausgelegt ist, ein nutzergeneriertes Eingabesignal zu erzeugen, welches über die Funkeinrichtung an ein Entsorgungsunternehmen ausgebbar ist. Dadurch können Leerungsfahrten des Entsorgungsunternehmens effizient und bedarfsgerecht geplant werden.

Erfindungsgemäß umfasst das Verfahren weiterhin den Schritt des Ausgebens eines Funksignals über eine Funkeinrichtung des Abfallbehältnisses, falls der ermittelte Füllgrad und/oder Füllstand des Abfallbehältnisses einen vorgebbaren Schwellwert überschreitet. Dies ermöglicht in vorteilhafter Weise ein bedarfsgerechtes Informieren des Entsorgungsunternehmens, so dass sich Leerungsfahrten optimieren und Treibstoff einsparen lässt. Weiterhin besteht dadurch der Vorteil, dass ein Nutzer über Smartphone oder ähnliche Kommunikationseinrichtungen stets über den Füllstand/Füllgrad des Abfallbehältnisses informiert bleibt.

Erfindungsgemäß umfasst das Verfahren weiterhin die Schritte des Ermittelns einer Momentantemperatur und/oder eines Gasgehalts in dem Abfallbehältnis, und des automatischen Ausgebens eines Alarmsignals über die Funkeinrichtung des Abfallbehältnisses, falls die ermittelte Momentantemperatur und/oder der ermittelte Gasgehalt einen vorgebbaren Alarmschwellwert überschreitet. Dies ermöglicht in vorteilhafter Weise ein frühzeitiges Bekämpfen von Gefahrensituationen, die von dem in dem Abfallbehältnis liegenden Abfall ausgehen können, wie beispielsweise Gasbildung durch Biomüll oder Brand durch übermäßige Hitzeentwicklung.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines Abfallbehältnisses mit einer Sensoranordnung gemäß einer Ausführungsform der vorliegenden Erfindung;
- Fig. 2: eine schematische Darstellung einer Sensoranordnung gemäß einer Ausführungsform der vorliegenden Erfindung; und
- Fig. 3: eine schematische Darstellung eines Verfahrens zum Überwachen eines Abfallbehältnisses gemäß einer weiteren Ausführungsform der vorliegenden Erfindung.

Abfallbehältnisse im Sinne der vorliegenden Erfindung umfassen jegliche Form von abgeschlossenen Behältern oder Containern zum temporären Sammeln und Aufbewahren von Abfällen oder zu entsorgenden Materialien. Abfallbehältnisse im Sinne der vorliegenden Erfindung sind insbesondere dazu geeignet, Abfälle bis zu periodisch oder bedarfsgerecht durchführbaren Leerungen durch Entsorgungsunternehmen zu verwahren. Abfallbehältnisse im Sinne der vorliegenden Erfindung können dabei Mülltonnen, Aschentonnen, Mülleimer, Papierkörbe oder sonstige Container zur Aufnahme von feststofflichen Gebrauchsgutüberresten umfassen.

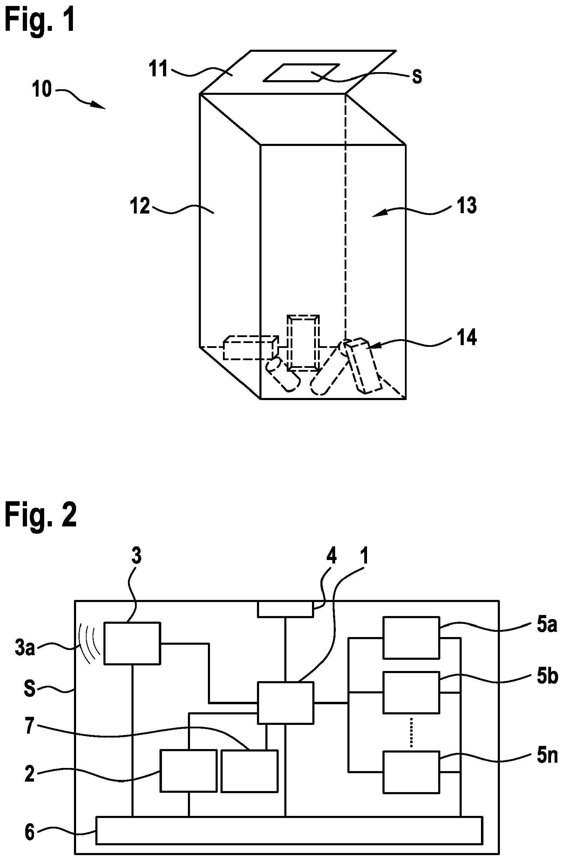

Fig. 1 zeigt eine schematische Darstellung eines Abfallbehältnisses 10 mit einer Sensoranordnung S. Das Abfallbehältnis 10 weist einen Behältniskörper 12 zur Aufnahme von feststofflichem Abfall oder zu entsorgenden Gegenständen 14 auf, welche im Inneren 13 des Behältniskörpers 12 aufgenommen werden können. Das Innere 13 des Behältniskörpers 12 ist dabei über einen reversibel verschließbaren und zu öffnenden Deckel 11 zugänglich, das heißt, ein Einwerfen von Abfall 14 in das Abfallbehältnis 10 ist nur unter Betätigung des Deckels 11 möglich. Der Deckel 11 kann dabei ein Schiebedeckel, ein Klappdeckel, ein Faltdeckel oder ein sonstiger geeigneter Verschluss des Abfallbehältnisses 10 sein, der unter mechanischer Betätigung zu öffnen und zu schließen ist.

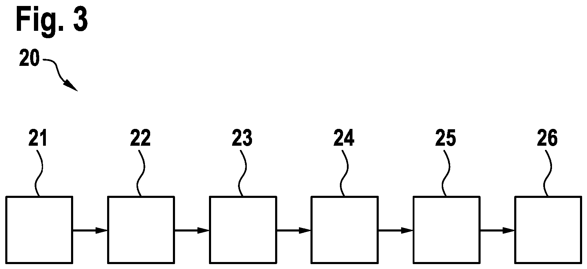

In den Deckel 11 integriert ist eine Sensoranordnung S, welche einen oder mehrere Sensoren aufweist. Fig. 2 zeigt eine schematische Darstellung einer beispielhaften Sensoranordnung S in größerem Detail. Die Sensoranordnung S kann beispielsweise in dem Abfallbehältnis 10 in Fig. 1 eingesetzt werden. Weiterhin kann die Sensoranordnung S zur Durchführung des in Fig. 3 beschriebenen Verfahrens zum Überwachen eines Abfallbehältnisses, insbesondere des Abfallbehältnisses 10 in Fig. 1, verwendet werden.

Die Sensoranordnung S weist einen ersten Sensor 2 auf, der dazu ausgelegt ist, ein Öffnen des Deckels 11 zu detektieren. Dazu kann der erste Sensor 2 beispielsweise einen Inertialsensor und/oder einen Beschleunigungssensor umfassen, zum Beispiel auf der Basis eines mikro-elektromechanischen Sensorelements. Der erste Sensor 2 kann in einem dauerhaften aktiven Betriebsmodus verbleiben, um zu jeder Zeit eine Bewegung des Deckels 11 zu registrieren. Der erste Sensor 2 kann ferner ein vorgebbares Bewegungsprofil des Deckels 11 speichern, und detektierte Bewegungen des Deckels 11 mit dem Bewegungsprofil abzugleichen, um ein tatsächliches Öffnen des Deckels 11 beispielsweise von einer zufälligen Bewegung durch Wind, durch ein Anstoßen an das Abfallbehältnis oder dergleichen zu diskriminieren.

Die Sensoranordnung S weist mindestens einen zweiten Sensor 5a, 5b bis 5n auf, welcher dazu ausgelegt ist, den Füllgrad und/oder den Füllstand des Abfallbehältnisses 10 sensorisch zu ermitteln. Der zweite Sensor 5a bis 5n ist dabei in einem Energiesparzustand betreibbar, solange bis durch den ersten Sensor 2 ein Öffnen des Deckels 11 detektiert worden ist. Der erste Sensor 2 und die zweiten Sensoren 5a bis 5n können dabei über eine Steuereinrichtung 1 wie beispielsweise einen Mikroprozessor, welcher mit den jeweiligen Sensoren verbunden ist, kommunizieren. Dabei ist die Steuereinrichtung 1 dazu ausgelegt, von dem ersten Sensor 2 nach Detektion eines Öffnens des Deckels 11 ein Wecksignal entgegenzunehmen. In Abhängigkeit dieses Wecksignals wird dann einer oder mehrere der zweiten Sensoren 5a bis 5n von dem Energiesparzustand in einen aktiven Betriebszustand zu versetzen. Im Energiesparzustand verbrauchen die zweiten Sensoren 5a bis 5n weniger Energie, so dass die Sensoranordnung S energieeffizienter betrieben werden kann.

Die zweiten Sensoren 5a bis 5n können dabei beispielsweise Radarsensoren, Ultraschallsensoren, Mikrowellensensoren, optische Sensoren, kapazitiv arbeitende Sensoren, Leitfähigkeitssensoren oder ähnliche Sensortypen sein. Dabei können die zweiten Sensoren 5a bis 5n die Füllhöhe des Abfalls einerseits und den Füllgrad, d.h. den Grad der Kompaktierung des Abfalls andererseits über geeignete Reflektions- oder Echverfahren ermitteln.

Der erste Sensor 2 kann hingegen einen Inertialsensor, einen Beschleunigungssensor, einen Drehratensensor oder ähnliche gyroskopische Sensoren umfassen, beispielsweise einen mikro-elektromechanischen oder mikromechanischen Sensor. Der erste Sensor 2 kann dabei detektierte Bewegungen bzw. Beschleunigungen des Deckels 11 erfassen und mit einem Beschleunigungsprofil abgleichen, um festzustellen, ob ein Öffnungs- und Schließungsvorgang tatsächlich erfolgt ist. Weiterhin kann der erste Sensor 2 auch ein Öffnen des Deckels 11 detektieren, ohne dass ein darauffolgendes Schließen erfolgt ist. Dies kann darauf hindeuten, dass Tiere wie Ratten, Mäuse, Wildschweine oder ähnliche Wildtiere in das Abfallbehältnis 10 eingedrungen sind.

Darüber hinaus weist die Sensoranordnung S weitere Sensoren auf wie beispielsweise einen Gassensor 7, welcher dazu ausgelegt ist, eine Gasbildung in dem Abfallbehältnis 10 zu detektieren, zum Beispiel durch Gärung von Biomüll. Dabei kann der Gassensor 7 chemoresistiv, kapazitiv, potentiometrisch, thermochemisch optisch oder biochemisch arbeiten und vorgebbare Gase bzw. Gasgemische wie beispielsweise Methan oder andere organische Substanzen detektieren. Weiterhin kann die Sensoranordnung S einen (nicht explizit gezeigten) Temperatursensor umfassen, welcher dazu ausgelegt ist, eine Momentantemperatur in dem Abfallbehältnis 10 zu ermitteln, beispielsweise um einen Brandausbruch oder die Gefahr eines Brandausbruchs festzustellen. In Abhängigkeit von den Detektionsergebnissen des Gassensors 7 und/oder des Temperatursensors kann beispielsweise ein Alarmsignal ausgegeben werden, welches die Umgebung des Abfallbehältnisses 10, den Nutzer des Abfallbehältnisses 10 oder die Feuerwehr alarmiert.

Zur Ausgabe von Alarmsignalen oder Funksignalen 3a kann die Sensoranordnung S eine Funkeinrichtung 3 aufweisen, welche mit der Steuereinrichtung 1 verbunden ist, und welche dazu ausgelegt ist, Funksignale 3a mit Informationen über den sensorisch ermittelten Füllgrad und/oder Füllstand des Abfallbehältnisses 10 auszusenden, beispielsweise an ein Entsorgungsunternehmen. Weiterhin kann über die Funkeinrichtung 3 auch das Alarmsignal an die Feuerwehr ausgegeben werden. Zur Einsparung von benötigter Funkenergie und drahtloser Infrastruktur kann das Funksignal 3a auch von Abfallbehältnis zu Abfallbehältnis weitergegeben werden, insbesondere wenn sich innerhalb eines bestimmten Umkreises mehrere der erfindungsgemäßen Abfallbehältnisse 10 befinden.

Die Sensoranordnung S weist zur Energieversorgung der einzelnen Komponenten eine Energieversorgungseinrichtung 6 auf, welche mit der Steuereinrichtung 1, dem ersten Sensor 2, dem Gassensor 7, der Funkeinrichtung 3 und/oder dem mindestens einen zweiten Sensor 5a bis 5n verbunden ist. Die Energieversorgungseinrichtung 6 ist dazu ausgelegt ist, die jeweiligen Komponenten mit elektrischer Energie zu versorgen. Dazu kann die Energieversorgungseinrichtung 6 eine Batterie, einen Akkumulator oder eine Energieerntevorrichtung wie Photovoltaikzellen, piezoelektrische Aktuatoren, pyroelektrische Kristalle oder Seebeck-Elemente aufweisen.

Das Abfallbehältnis 10 kann ein Nutzerbedienelement 4 umfassen, welches mit der Steuereinrichtung 1 verbunden ist, und welches dazu ausgelegt ist, ein nutzergeneriertes Eingabesignal zu erzeugen. Das Nutzerbedienelement 4 kann beispielsweise ein von außen bedienbarer Taster sein, welche durch Drücken durch einen Nutzer aktivierbar ist. Das Eingabesignal über das Nutzerbedienelement 4 kann beispielsweise über die Funkeinrichtung 3 an ein Entsorgungsunternehmen ausgegeben werden, um eine Leerung des Abfallbehältnisses 10 zu initiieren.

Fig. 3 zeigt eine schematische Darstellung eines Verfahrens 20 zum Überwachen eines Abfallbehältnisses, beispielsweise des Abfallbehältnisses 10 in Fig. 1. Dazu kann das Verfahren beispielsweise mithilfe einer Sensoranordnung, zum Beispiel der Sensoranordnung in Fig. 2 implementiert werden.

In einem ersten Schritt 21 erfolgt ein Detektieren eines Öffnens eines Deckels 11 des Abfallbehältnisses 10. In Abhängigkeit von einem detektierten öffnen des Deckels 11 kann in einem zweiten Schritt 22 ein Sensor einer Sensoranordnung S des Abfallbehältnisses 10 dann von einem Energiesparzustand in einem aktiven Betriebszustand versetzt werden. Dies ermöglicht in einem dritten Schritt 23 ein Ermitteln eines Füllgrads und/oder Füllstands des Abfallbehältnisses 10 durch den Sensor. Optional kann in einem Schritt 24 ein Funksignal 3a über eine Funkeinrichtung 3 des Abfallbehältnisses 10 ausgegeben werden, falls der ermittelte Füllgrad und/oder Füllstand des Abfallbehältnisses 10 einen vorgebbaren Schwellwert überschreitet. Das Funksignal 3a kann an ein Entsorgungsunternehmen ausgegeben werden, um ein bedarfsgerechtes Entleeren des Abfallbehältnisses 10 zu ermöglichen. Insbesondere kann der vorgebbare Schwellwert einen gewissen prozentualen für das Abfallbehältnis 10 maximal möglichen Füllgrads bzw. Füllstands Wert aufweisen, damit für das Entsorgungsunternehmen eine gewisse Reaktionszeit für das Vornehmen der Entleerung gewährleistet bleibt.

Weiterhin ist vorgesehen, in einem Schritt 25 ein Ermitteln einer Momentantemperatur und/oder eines Gasgehalts in dem Abfallbehältnis 10 durchzuführen, um dann in einem optionalen Schritt 26 automatisch ein Alarmsignal über die Funkeinrichtung 3 des Abfallbehältnisses 10 auszugeben, falls die ermittelte Momentantemperatur und/oder der ermittelte Gasgehalt einen vorgebbaren Alarmschwellwert überschreitet. Das Alarmsignal kann beispielsweise an die Feuerwehr, das technische Hilfswerk, ein dem Abfallbehältnis 10 zugeordnetes Entsorgungsunternehmen oder eine andere Notrufstelle abgegeben werden, damit ein etwaiger Brand oder etwaige unerwünschte schädliche Gasentwicklung schnellstmöglich unterbunden werden kann.

## Patentansprüche

1. Abfallbehältnis (10), mit:
- einem Deckel (11);
- einer in dem Deckel (11) integrierten Sensoranordnung (S), welche einen ersten Sensor (2) und mindestens einen zweiten Sensor (5a, ..., 5n) aufweist, wobei der erste Sensor (2) dazu ausgelegt ist, ein öffnen des Deckels (11) zu detektieren, und wobei der mindestens eine zweite Sensor (5a; ...; 5n) dazu ausgelegt ist, den Füllgrad und/oder den Füllstand des Abfallbehältnisses (10) sensorisch zu ermitteln, wobei der zweite Sensor (5a; ...; 5n) in einem Energiesparzustand betreibbar ist, bis durch den ersten Sensor (2) ein Öffnen des Deckels (11) detektiert worden ist;
- einer Steuereinrichtung (1), welche mit dem ersten Sensor (2) und dem mindestens einen zweiten Sensor (5a; ...; 5n) verbunden ist, und welche dazu ausgelegt ist, von dem ersten Sensor (2) nach Detektion eines Öffnens des Deckels (11) ein Wecksignal entgegenzunehmen und in Abhängigkeit von dem Wecksignal den zweiten Sensor (5a; ...; 5n) von dem Energiesparzustand in einen aktiven Betriebszustand zu versetzen;
- einer Funkeinrichtung (3), welche mit der Steuereinrichtung (1) verbunden ist, und welche dazu ausgelegt ist, ein Funksignal (3a) mit Informationen über den sensorisch ermittelten Füllgrad und/oder Füllstand des Abfallbehältnisses (10) auszusenden; und
- einem Gassensor (7), welcher dazu ausgelegt ist, eine Gasbildung in dem Abfallbehältnis (10) zu detektieren, und/oder einem Temperatursensor, welcher dazu ausgelegt ist, eine Momentantemperatur in dem Abfallbehältnis (10) zu ermitteln;
wobei die Funkeinrichtung (3) automatisch ein Alarmsignal über die Funkeinrichtung (3) des Abfallbehältnisses (10) ausgibt, falls die ermittelte Momentantemperatur und/oder der ermittelte Gasgehalt einen vorgebbaren Alarmschwellwert überschreitet.

2. Abfallbehältnis (10) nach Anspruch 1, weiterhin mit:
einer Energieversorgungseinrichtung (6), welche mit der Steuereinrichtung (1), dem ersten Sensor (2) und/oder dem mindestens einen zweiten Sensor (5a; ...; 5n) verbunden ist, und welche dazu ausgelegt ist, die Steuereinrichtung (1), den ersten Sensor (2) und/oder den mindestens einen zweiten Sensor (5a; ...; 5n) mit elektrischer Energie zu versorgen.

3. Abfallbehältnis (10) nach Anspruch 2, wobei die Energieversorgungseinrichtung (6) eine Batterie, einen Akkumulator oder eine Energieerntevorrichtung aufweist.

4. Abfallbehältnis (10) nach einem der Ansprüche 1 bis 3, wobei der zweite Sensor (5a; ...; 5n) einen Radarsensor und/oder einen Ultraschallsensor umfasst.

5. Abfallbehältnis (10) nach einem der Ansprüche 1 bis 4, wobei der erste Sensor (2) einen Inertialsensor und/oder einen Beschleunigungssensor umfasst.

6. Abfallbehältnis (10) nach Anspruch 1, weiterhin mit:
einem Nutzerbedienelement, welches mit der Steuereinrichtung (1) verbunden ist, und welches dazu ausgelegt ist, ein nutzergeneriertes Eingabesignal zu erzeugen, welches über die Funkeinrichtung (3) an ein Entsorgungsunternehmen ausgebbar ist.

7. Abfallbehältnis (10) nach einem der Ansprüche 1 bis 6, wobei der Deckel (11) ein Schiebedeckel oder ein Klappdeckel oder ein Faltdeckel oder ein Verschluss des Abfallbehältnisses (10) ist, wobei der Verschluss unter mechanischer Betätigung zu öffnen und zu schließen ist.

8. Verfahren (20) zum Überwachen eines Abfallbehältnisses (10), mit den Schritten:
- Detektieren (21) eines Öffnens eines Deckels (11) des Abfallbehältnisses (10) mit einem ersten Sensor (2) einer in dem Deckel (11) integrierten Sensoranordnung (S);
- Aktivieren (22) eines zweiten Sensors (5a; ...; 5n) der Sensoranordnung (S) des Abfallbehältnisses (10) in Abhängigkeit von dem Detektieren des Öffnens des Deckels (11) von einem Energiesparzustand in einem aktiven Betriebszustand;
- Ermitteln (23) eines Füllgrads und/oder Füllstands des Abfallbehältnisses (10) durch den zweiten Sensor (5a; ...; 5n);
- Ausgeben (24) eines Funksignals (3a) über eine Funkeinrichtung (3) des Abfallbehältnisses (10), falls der ermittelte Füllgrad und/oder Füllstand des Abfallbehältnisses (10) einen vorgebbaren Schwellwert überschreitet;
- Ermitteln (25) einer Momentantemperatur und/oder eines Gasgehalts in dem Abfallbehältnis (10); und automatisches Ausgeben (26) eines Alarmsignals über die Funkeinrichtung (3) des Abfallbehältnisses (10), falls die ermittelte Momentantemperatur und/oder der ermittelte Gasgehalt einen vorgebbaren Alarmschwellwert überschreitet

## Claims

1. Waste container (10) having:
- a cover (11);
- a sensor arrangement (S) which is integrated in the cover (11) and has a first sensor (2) and at least one second sensor (5a, ..., 5n), wherein the first sensor (2) is designed to detect opening of the cover (11), and wherein the at least one second sensor (5a, ..., 5n) is designed to determine the degree of filling and/or the filling level of the waste container (10) using sensory means, wherein the second sensor (5a, ..., 5n) can be operated in an energy-saving state until opening of the cover (11) has been detected by the first sensor (2);
- a control device (1) which is connected to the first sensor (2) and to the at least one second sensor (5a, ..., 5n) and is designed to receive a wake-up signal from the first sensor (2) after opening of the cover (11) has been detected and to change the second sensor (5a, ..., 5n) from the energy-saving state into an active operating state on the basis of the wake-up signal;
- a radio device (3) which is connected to the control device (1) and is designed to emit a radio signal (3a) containing information relating to the degree of filling and/or the filling level of the waste container (10) determined using sensory means; and
- a gas sensor (7) which is designed to detect the formation of a gas in the waste container (10), and/or a temperature sensor which is designed to determine an instantaneous temperature in the waste container (10); wherein
the radio device (3) automatically outputs an alarm signal via the radio device (3) of the waste container (10) if the determined instantaneous temperature and/or the determined gas content exceed(s) a predefinable alarm threshold value.

2. Waste container (10) according to Claim 1, also having:
an energy supply device (6) which is connected to the control device (1), to the first sensor (2) and/or to the at least one second sensor (5a, ..., 5n) and is designed to supply the control device (1), the first sensor (2) and/or the at least one second sensor (5a, ..., 5n) with electrical energy.

3. Waste container (10) according to Claim 2, wherein the energy supply device (6) has a battery, a rechargeable battery or an energy harvesting apparatus.

4. Waste container (10) according to one of Claims 1 to 3, wherein the second sensor (5a, ..., 5n) comprises a radar sensor and/or an ultrasonic sensor.

5. Waste container (10) according to one of Claims 1 to 4, wherein the first sensor (2) comprises an inertial sensor and/or an acceleration sensor.

6. Waste container (10) according to Claim 1, also having:
a user operating element which is connected to the control device (1) and is designed to generate a user-generated input signal which can be output to a disposal company via the radio device (3).

7. Waste container (10) according to one of Claims 1 to 6, wherein the cover (11) is a sliding cover or a hinged cover or a folding cover or a closure of the waste container (10), wherein the closure can be opened and closed with mechanical actuation.

8. Method (20) for monitoring a waste container (10), having the steps of:
- detecting (21) opening of a cover (11) of the waste container (10) using a first sensor (2) of a sensor arrangement (S) integrated in the cover (11);
- activating (22) a second sensor (5a, ..., 5n) of the sensor arrangement (S) of the waste container (10) from an energy-saving state into an active operating state on the basis of the detection of opening of the cover (11);
- determining (23) a degree of filling and/or a filling level of the waste container (10) by means of the second sensor (5a, ..., 5n);
- outputting (24) a radio signal (3a) via a radio device (3) of the waste container (10) if the determined degree of filling and/or filling level of the waste container (10) exceed(s) a predefinable threshold value;
- determining (25) an instantaneous temperature and/or a gas content in the waste container (10); and automatically outputting (26) an alarm signal via the radio device (3) of the waste container (10) if the determined instantaneous temperature and/or the determined gas content exceed(s) a predefinable alarm threshold value.

## Revendications

1. Récipient à déchets (10), comprenant :
- un couvercle (11) ;
- un ensemble de capteurs (S) intégré dans le couvercle (11) et qui présente un premier capteur (2) et au moins un deuxième capteur (5a, ..., 5n), le premier capteur (2) étant conçu pour détecter une ouverture du couvercle (11), et ledit au moins un deuxième capteur (5a, ..., 5n) étant conçu pour établir de manière sensorielle le degré de remplissage et/ou le niveau de remplissage du récipient à déchets (10), le deuxième capteur (5a, ..., 5n) pouvant fonctionner dans un état d'économie d'énergie jusqu'à ce que le premier capteur (2) ait détecté une ouverture du couvercle (11) ;
- un équipement de commande (1) qui est relié au premier capteur (2) et audit au moins un deuxième capteur (5a, ..., 5n), et qui est conçu pour recevoir un signal de réveil du premier capteur (2) après la détection d'une ouverture du couvercle (11), et pour faire passer le deuxième capteur (5a, ..., 5n) de l'état d'économie d'énergie à un état de fonctionnement actif en fonction du signal de réveil ;
- un équipement radio (3) qui est relié à l'équipement de commande (1), et qui est conçu pour émettre un signal radio (3a) avec des informations concernant le degré de remplissage et/ou le niveau de remplissage du récipient à déchets (10) établi(s) de manière sensorielle ; et
- un capteur de gaz (7) qui est conçu pour détecter une formation de gaz dans le récipient à déchets (10), et/ou un capteur de température qui est conçu pour établir une température instantanée dans le récipient à déchets (10) ;
dans lequel l'équipement radio (3) sort automatiquement un signal d'alarme par l'intermédiaire de l'équipement radio (3) du récipient à déchets (10) si la température instantanée établie et/ou la teneur en gaz établie dépasse(nt) une valeur seuil d'alarme prédéfinissable.

2. Récipient à déchets (10) selon la revendication 1, comprenant en outre :
un équipement d'alimentation en énergie (6) qui est relié à l'équipement de commande (1), au premier capteur (2) et/ou audit au moins un deuxième capteur (5a, ..., 5n), et qui est conçu pour alimenter en énergie électrique l'équipement de commande (1), le premier capteur (2) et/ou ledit au moins un deuxième capteur (5a, ..., 5n) .

3. Récipient à déchets (10) selon la revendication 2, dans lequel l'équipement d'alimentation en énergie (6) présente une batterie, un accumulateur ou un dispositif de récupération d'énergie.

4. Récipient à déchets (10) selon l'une quelconque des revendications 1 à 3, dans lequel le deuxième capteur (5a, ..., 5n) comprend un capteur radar et/ou un capteur à ultrasons.

5. Récipient à déchets (10) selon l'une quelconque des revendications 1 à 4, dans lequel le premier capteur (2) comprend un capteur inertiel et/ou un capteur d'accélération.

6. Récipient à déchets (10) selon la revendication 1, comprenant en outre :
un élément d'actionnement utilisateur qui est relié à l'équipement de commande (1), et qui est conçu pour produire un signal d'entrée généré par l'utilisateur qui peut être sorti à destination d'une entreprise de collecte par l'équipement radio (3).

7. Récipient à déchets (10) selon l'une quelconque des revendications 1 à 6, dans lequel le couvercle (11) est un couvercle coulissant ou un couvercle rabattable ou un couvercle pliant ou un élément de fermeture du récipient à déchets (10), l'élément de fermeture pouvant être ouvert ou fermé sous l'effet d'un actionnement mécanique.

8. Procédé (20) permettant de surveiller un récipient de déchets (10), comprenant les étapes consistant à :
- détecter (21) une ouverture d'un couvercle (11) du récipient à déchets (10) par un premier capteur (2) d'un ensemble de capteurs (S) intégré dans le couvercle (11) ;
- activer (22) un deuxième capteur (5a, ..., 5n) de l'ensemble de capteurs (S) du récipient à déchets (10) en fonction de la détection de l'ouverture du couvercle (11) d'un état d'économie d'énergie à un état de fonctionnement actif ;
- établir (23) un degré de remplissage et/ou un niveau de remplissage du récipient à déchets (10) par le deuxième capteur (5a, ..., 5n) ;
- sortir (24) un signal radio (3a) par un équipement radio (3) du récipient à déchets (10) si le degré de remplissage et/ou le niveau de remplissage établi(s) du récipient à déchets (10) dépasse(nt) une valeur seuil prédéfinissable ;
- établir (25) une température instantanée et/ou une teneur en gaz dans le récipient à déchets (10) ; et
- sortir automatiquement (26) un signal d'alarme par l'équipement radio (3) du récipient à déchets (10) si la température instantanée établie et/ou la teneur en gaz établie dépasse(nt) une valeur seuil d'alarme prédéfinissable.
